Europäisches Patentamt

European Patent Office

Office européen des brevets

(11) Veröffentlichungsnummer : **0 091 496**
B1

# (12) EUROPÄISCHE PATENTSCHRIFT

(45) Veröffentlichungstag der Patentschrift :
03.12.86

(51) Int. Cl.⁴ : **G 01 M   1/16**

(21) Anmeldenummer : **82103027.7**

(22) Anmeldetag : **08.04.82**

(54) **Verfahren und Vorrichtung zur Bestimmung des Zusammenhangs zwischen einer Unwucht an einer Ausgleichsebene und einem durch sie hervorgerufenen Messsignal.**

(43) Veröffentlichungstag der Anmeldung :
19.10.83 Patentblatt 83/42

(45) Bekanntmachung des Hinweises auf die Patenterteilung : 03.12.86 Patentblatt 86/49

(84) Benannte Vertragsstaaten :
**CH DE FR GB LI SE**

(56) Entgegenhaltungen :
DE-B- 1 095 549
SOVIET INVENTIONS ILLUSTRATED DERWENT PUBLICATIONS LTD., Woche E17, 9. Juni 1982, London, G.B. "Finding dynamic characteristics of rotors - by deflection measurements with different rotor support stiffnesses but same rotor speed"

(73) Patentinhaber : **CARL SCHENCK AG**
**Landwehrstrasse 55 Postfach 40 18**
**D-6100 Darmstadt (DE)**

(72) Erfinder : **Müller, Michael, Dr.**
**Holegrabestrasse 589a**
**CH-5426 Lengnau (CH)**
Erfinder : **Giers, Alfred, Dipl.-Ing.**
**Messeler Weg 12**
**D-6101 Rossdorf (DE)**
Erfinder : **Heiland, Manfred, Dipl.-Ing.**
**Mittermayerstrasse 1c**
**D-6100 Darmstadt-Neu-Kranichstein (DE)**

(74) Vertreter : **Dallhammer, Herbert, Dipl.-Ing.**
**CARL SCHENCK AG Patentabteilung Postfach 4018**
**Landwehrstrasse 55**
**D-6100 Darmstadt (DE)**

# 0 091 496

**Beschreibung**

Die Erfindung betrifft ein Verfahren und eine Vorrichtung zur Bestimmung des Zusammenhanges zwischen einer Unwucht in einer Ausgleichsebene eines Rotors, insbesondere eines elastischen Rotors, und einem durch die Unwucht an einem Lagerständer des Rotors, insbesondere einem Lagerständer einer Auswuchtmaschine, hervorgerufenen Meßsignal.

Aus SU-A-847 105 ist ein Verfahren zur Bestimmung dynamischer Eigenschaften von Rotoren bekannt, bei dem die Auslenkungen der Rotoren in vorgegebenen Querschnittsebenen jeweils für unterschiedliche Steifigkeiten mindestens eines Lagerständers, aber jeweils bei derselben Rotordrehzahl erfaßt werden.

Zum Auswuchten eines Rotors muß der Zusammenhang zwischen der Unwucht in den Ausgleichsebenen des Rotors und den durch diese Unwucht an den Lagerständern hervorgerufenen Meßsignalen bekannt sein. Dieser Zusammenhang wird bisher beispielsweise so ermittelt, daß bei der Meßdrehzahl zunächst die Schwingungen des unwuchtigen Rotors an den Lagern gemessen werden. Dann wird der Rotor angehalten, in der ersten Ausgleichsebene wird eine Testunwucht definierter Größe angebracht und die Schwingungen an den Lagern des Rotors werden wiederum gemessen. Aus der Größe der Testunwucht und der sich ergebenden Schwingungsänderung kann die Unwucht in der ersten Ausgleichsebene auf die Lager ermittelt werden. Dieser Vorgang wird dann für die zweite und alle weiteren Ausgleichsebenen wiederholt. Diese Vorgehensweise ist zeitraubend und kostenspielig, da für jede Ausgleichsebene ein neuer Testlauf durchgeführt werden muß.

Ausgehend hiervon liegt der Erfindung die Aufgabe zugrunde, die Wirkung der Unwucht in der Ausgleichsebene auf die Lager schnell und genau zu ermitteln, ohne daß von dem auszuwuchtenden Rotor irgendwelche Daten bekannt sind. Diese Aufgabe wird erfindungsgemäß durch die in Anspruch 1 angegebene Verfahrensweise gelöst. Zur Ermittlung des Zusammenhangs bedarf es lediglich einer einzigen Meßdrehzahl und eines einzigen Meßlaufs, auch wenn eine Mehrzahl von Ausgleichsebenen und Lagerstellen zu berücksichtigen sind.

In einer Ausgestaltung des erfindungsgemäßen Verfahrens werden für jeden eventuell vorhandenen weiteren Lagerständer und/oder jede eventuell vorhandene weitere Ausgleichsebene die jeweiligen, sich bei der Zuordnung jedes der Lagerständer zu jeder der Ausgleichsebenen ergebenden Quotienten entsprechend dem genannten Quotienten ermittelt, wobei mindestens ein Lagerständer verstimmt wird.

Eine vorteilhafte Ausgestaltung des erfindungsgemäßen Verfahrens, bei dem ohne Unterbrechung des Meßlaufs die Unwucht auch bei mehreren Drehzahlen durch Änderung der Meßdrehzahl festgestellt werden kann, ist in Anspruch 3 definiert.

Die in Anspruch 4 der vorliegenden Erfindung offenbarte Verfahrensweise bietet eine Lösung für den Fall an, daß die Ausgleichsebene des Rotors für die Messung nicht zugänglich ist.

Die in Anspruch 5 definierte Verfahrensweise offenbart, wie die in der Ausgleichsebene anzubringende Korrektur ermittelt wird.

Das erfindungsgemäße Verfahren wird mit Hilfe einer Vorrichtung, wie sie in Anspruch 6 definiert ist, durchgeführt. Hierbei kann die Auswerteeinheit mit Analog- oder Digitalbausteinen oder einer Kombination von ihnen sowohl im Auswerteteil als auch im Anzeigeteil ausgerüstet sein.

Anspruch 7 offenbart die Anwendung mehrerer verschieb- und arretierbarer Schwingungsumformer.

In Anspruch 9 wird angegeben, wie die Vorrichtung zur Durchführung des Verfahrens durch den Einsatz einer Laser-Meßeinrichtung wesentlich verbessert werden kann.

Die Erfindung erstreckt sich sowohl auf kraftmessende als auch wegmessende Auswuchtmaschinen und sie umfaßt insbesondere das Gebiet der elastischen Rotoren.

In der nachfolgenden Beschreibung wird die Erfindung anhand von Ausführungsbeispielen näher erläutert. Es zeigen in schematischer Darstellung :

Figur 1  eine erfindungsgemäße Auswuchtvorrichtung zur Durchführung des Verfahrens,

Figur 2  eine Draufsicht auf die in Fig. 1 dargestellte Auswuchtvorrichtung

Figur 3  ein Blockschaltbild einer efindungsgemäßen Auswerteinrichtung.

Ein auf zwei Auswuchtmaschinenlagerständern 1, 2 gelagerter Rotor 3 wird über eine Gelenkwelle 4 von einem Elektromotor 5 angetrieben. An den Elektromotor ist ein Phasengeber 6 und ein Drehzähler 7 gekuppelt. Der Elektromotor kann auch mit einem Getriebe versehen sein. Anstelle der Gelenkwelle kann der Rotor 3 auch über einen Riementrieb angetrieben werden, wobei eine Markierung 8 am Rotor als Phasenbezugsmarke dienen kann. An den Lagerständern 1 und 2 sind Schwingungsumformer 9, 10 angeordnet, welche die unwuchterzwungenen Schwingungen der Lagerständer 1, 2 in elektrische Signale wandeln, und diese dann an eine Auswerteeinheit 12 weiterleiten. An einer Führung 13 ist ein weiterer Schwingungsumformer 17 verschieb- und arretierbar angeordnet, mit dem die Schwingungen des Rotors 3 an seinen Ausgleichsebenen 11, 11' usw. gemessen werden. Diese Meßsignale werden ebenfalls der Auswerteeinrichtung 12 zugeführt. Die dynamische Steifigkeit der Lagerständer 1 und 2 kann mittels einer Einrichtung 14, 15 verändert werden. Die Veränderung erfolgt durch Zufügen oder Wegnahme einer elastischen Feder, einer Dämpfung oder durch Verändern der mitschwingenden Lagermasse, wobei jede Maßnahme einzeln oder eine Kombination von ihnen durchgeführt werden kann. Durch einen Vakuumbehälter 16 wird angedeutet, daß dieses Verfahren auch im Vakuum durchgeführt werden kann.

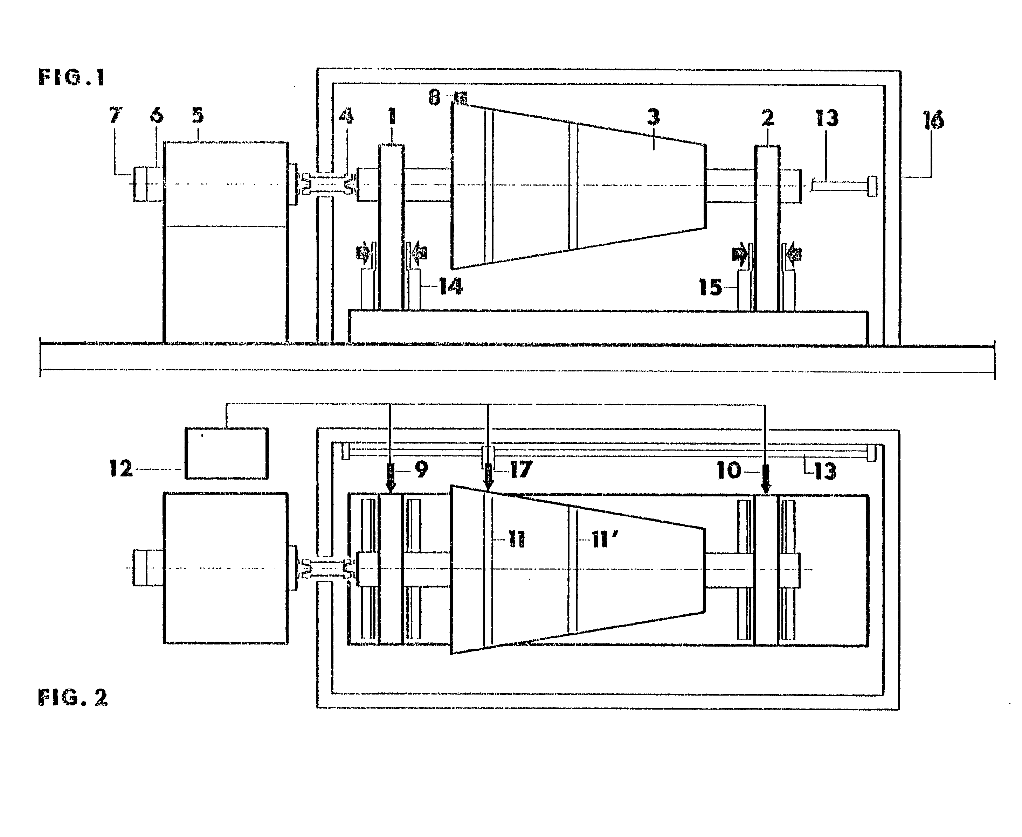

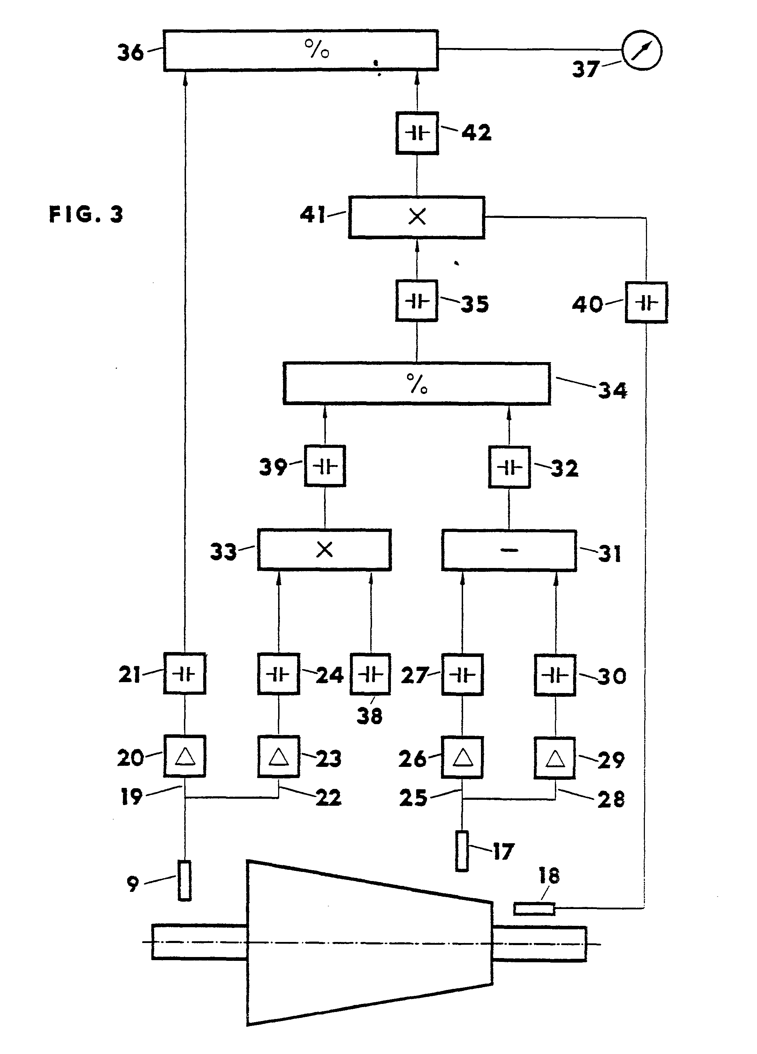

Anhand der Fig. 1 und 2 wird nun das erfindungsgemäße Verfahren erläutert, das auch in der Formel

$$a_{ij} = \frac{s_i^B - s_i^A}{(c_A - c_B) \cdot s_j^B} \cdot \Omega^2$$

anschaulich dargestellt wird.

Hierbei bedeutet :

$a_{ij}$ = Quotient der den Zusammenhang zwischen der Unwucht in der Ebene i und einem durch die Unwucht am Lagerständer j hervorgerufenen Meßsignal beschreibt

$S_i$ = die Auslenkung des Rotors in der Ebene i

B = der Zustand nach Verstimmung des Lagerständers

A = der Zustand vor Verstimmung des Lagerständers

C = dynamische Lagersteifigkeit des Lagerständers

$S_j$ = Auslenkung an dem verstimmten Lagerständer

$\Omega$ = Drehfrequenz

Zunächst wird der Rotor 3 in den Auswuchtmaschinenlagerständern 1, 2 eingelagert und über die Gelenkwelle 4 mit dem Antriebsmotor 5 gekoppelt. Dann wird der Rotor auf die vom Drehzähler 7 vorgegebene Drehzahl gebracht. Mit dem Schwingungsumformer 17 werden nun die Schwingungen des Rotors 3 an seinen Ausgleichsebenen 11, 11' in elektrische Signale umgeformt und der Auswerteeinheit 12 zugeführt. Dann wird am linken Lagerständer 1 die Steifigkeit mittels Einrichtung 14 umgeschaltet und wiederum werden die Schwingungen des Rotors 3 an den Ausgleichsebenen 11, 11' gemessen. Zusätzlich wird die Schwingung des linken Lagerständers 1 gemessen. Alle Meßsignale werden der Auswerteeinrichtung 12 zugeführt. Aus diesen Signalen ergibt sich der Zusammenhang zwischen einer Unwucht in der Ausgleichsebene 11 und den durch sie erzwungenen Schwingungen des nicht umgeschalteten Lagerständers als Quotient aus Differenz der Schwingungen an der Ausgleichsebene bei umgeschalteter und nicht umgeschalteter Steifigkeit und Schwingungen an dem Lager mit umgeschalteter Steifigkeit ; das ganze wird dann noch durch die Differenz der dynamischen Steifigkeiten des umschaltbaren Lagerständers dividiert. Diese Auswertung wird in der Auswerteeinheit 12 durchgeführt, wie später erläutert wird. Nachdem die Unwucht im linken Lagerständer ermittelt ist, wird die Umschaltung des linken Lagerständers rückgängig gemacht und dann das Verfahren für den zweiten Lagerständer durchgeführt. Wenn die Unwuchtwirkung auch bei verschiedenen Drehzahlen ermittelt werden soll, können andere Drehzahlen angefahren und die Messungen dort durchgeführt werden.

Das in Fig. 3 dargestellte Schaltbild zeigt die elektrische Verarbeitung der gewonnenen Informationen. Die Verarbeitung und Anzeige der Meßwerte kann in analoger oder digitaler Form erfolgen. Eine Drehzahlüberwachungseinrichtung 18 stellt sicher, daß die einmal eingestellte Drehzahl während der Einspeisung der Meßwerte konstant bleibt. Die Signale für die Schwingungen des unverstimmten Lagerständers werden vom Schwingungsumformer 9 über eine Leitung 19 gesiebt und verstärkt einem Verstärker 20 und als vektorielle Größe einem Speicher 21 zugeführt, in dem sie zur späteren Verarbeitung gespeichert bleiben. Die Signale für die Schwingungen des Rotors 3 an einer Ausgleichsebene 11 bei unverstimmter Steifigkeit werden vom Meßumformer 17 über eine Leitung 25 und einen weiteren Verstärker 26 ebenfalls einem Haltespeicher 27 zugeführt. Dann wird die Steifigkeit des linken Lagerständers umgeschaltet und die Lagerschwingungen über eine Leitung 22 und einen noch weiteren Verstärker 23 einem weiteren Haltespeicher 24 zugeführt. Die Schwingungen des Rotors mit umgeschalteter Lagersteifigkeit an seiner Ausgleichsebene werden über eine Leitung 28 und einen Spannungsverstärker 29 einem Wertespeicher 30 zugeführt. Mit einer Differenzschaltung 31 werden nun die Signale aus dem Haltespeicher 27 und dem Wertespeicher 30 von einander subtrahiert und das Ergebnis in einem Differenzspeicher 32 gespeichert. Desgleichen wird mit einem Multiplizierer 33 der Wert aus dem weiteren Haltespeicher 24 mit dem in einem Faktorspeicher 38 abgelegten Faktor für die Differenz der dynamischen Steifigkeiten multipliziert.

Das Ergebnis wird in einem nachgeschalteten Speicher 39 abgelegt. Eine Divisionsschaltung 34 bildet nun den Quotienten der im nachgeschalteten Speicher 39 und im Differenzspeicher 32 abgelegten Werte und speichert sie in einem Ergebnisspeicher 35. Dieser Wert wird mit von der Überwachungseinrichtung 18 kommenden Informationen über die Drehfrequenz, die quadriert in einem Drehfrequenzenspeicher 40 abgespeichert wird, in einer weiteren Multiplizierschaltung 41 multipliziert und dieses Produkt in einem Endspeicher 42 abgelegt. Mit einer weiteren Divisionsschaltung 36 wird dann der Quotient aus den im Speicher 21 und im Endspeicher 42 abgelegten Werten gebildet und als in der Ausgleichsebene anzubringende Korrektur nach Betrag und Winkel in einer Anzeige 37 dargestellt. Anstelle der Anzeige kann auch eine Verarbeitungseinrichtung angeschlossen sein, welche die im Rotor vorhandene Unwucht direkt beseitigt.

Das anhand von Fig. 3 beschriebene Blockschaltbild zeigt in einfachster Ausführung die Auswertung der Meßwerte für eine Meßebene und ein verstimmbares Lager. Es ist jedoch ohne weiteres ersichtlich, daß bei Anordnung mehrerer derartiger Schaltungseinrichtungen mehrere Lagerständer und mehrere Ausgleichsebenen berücksichtigt werden können. Auch ist es möglich, daß durch eine Multiplexschaltung mit einer einzigen derartigen Schaltungsanordnung die Meßwerte eines Rotors, der in zwei verstimmbaren Auswuchtmaschinenlagerungen gelagert ist und der beispielsweise als elastischer Rotor fünf Ausgleichsebenen besitzt, ausgewertet und angezeigt werden können; bzw. in einer, nach der Anzeige angeordneten Speichereinheit die Meßwerte für eine spätere Unwuchtbeseitigung in den einzelnen Ebenen gespeichert und zur Verfügung gehalten werden können.

Mit der Erfindung wird erstmals der Einsatz von an sich zur Messung der Entfernung bekannten Laser-Einrichtungen für das Auswuchten vorgeschlagen.

**Patentansprüche**

1. Verfahren zur Bestimmung des Zusammenhanges zwischen einer Unwucht in einer Ausgleichsebene eines Rotors, insbesondere eines elastischen Rotors, und einem durch die Unwucht an einem Lagerständer des Rotors, insbesondere einem Lagerständer einer Auswuchtmaschine, hervorgerufenen Meßsignal, dadurch gekennzeichnet, daß bei einer gegebenen Meßdrehzahl zunächst die Auslenkung des Rotors an der Ausgleichsebene aus der Nullage gemessen wird, nach einer Verstimmung der Schwingungseigenschaften des Lagerständers wiederum die Auslenkungen des Rotors an der Ausgleichebene und zusätzlich die Schwingungen an dem verstimmten Lagerständer gemessen werden und daß danach der Zusammenhang zwischen der Unwucht und dem Meßsignal durch Bildung des Quotienten aus der Differenz der Auslenkungen des Rotors an der Ausgleichsebene bei verstimmtem und unverstimmtem Lagerständer multipliziert mit der Drehfrequenz zum Quadrat einerseits und dem Produkt aus der Auslenkung des verstimmten Lagerständers und einem die Verstimmung beschreibenden Faktor andererseits ermittelt wird.

2. Verfahren nach Anspruch 1, dadurch gekennzeichnet, daß bei Vorhandensein mehrerer Lagerständer und/oder Vorhandensein mehrerer Ausgleichsebenen und bei Verstimmung mindestens eines Lagerständers die jeweiligen, sich bei der Zuordnung jedes der Lagerständer zu jeder der Ausgleichsebenen ergebenden Quotienten entsprechend dem genannten Quotienten ermittelt werden.

3. Verfahren nach Anspruch 1 oder Anspruch 2, dadurch gekennzeichnet, daß die Verstimmung des Lagerständers bei mindestens einer Meßdrehzahl während des Meßlaufs erfolgt.

4. Verfahren nach einem der vorhergehenden Ansprüche, dadurch gekennzeichnet, daß um die Ausgleichsebene mehrere Auslenkungen in axialen Abständen von dieser gemessen werden, und daß daraus die Auslenkung in der Ausgleichsebene interpoliert wird.

5. Verfahren nach einem der vorhergehenden Ansprüche, dadurch gekennzeichnet, daß zur Bestimmung der Unwucht des Rotors nach Lage und Größe der Kehrwert des Quotienten mit dem Meßwert multipliziert wird, der die Auslenkung des unverstimmten Lagerständers beschreibt.

6. Vorrichtung zur Durchführung des Verfahrens nach einem der Ansprüche 1 bis 5 mit einer Auswuchtmaschine bestehend aus einem oder mehreren, in seinen bzw. ihren Schwingungseigenschaften verstimmbaren Lagerständer bzw. Lagerständern (1, 2) zur drehbaren Lagerung des zu untersuchenden Rotors (3), einem Antrieb (5) für den Rotor (3), einem Winkellagengeber (6), Einrichtungen (9, 10) zur Erfassung der Schwingungen des oder der Lagerständer (1, 2) und einer Auswerteeinrichtung (12), dadurch gekennzeichnet, daß seitlich des Rotors (3) mindestens ein Schwingungsumformer (17) angebracht ist, der die Schwingungen des Rotors (3) an der mindestens einen Ausgleichsebene (11, 11') mißt, daß zur Verstimmung des Lagerständers bzw. der Lagerständer (1, 2) Einrichtungen (14 bzw. 15) vorgesehen sind, mittels der seine bzw. ihre Federsteifigkeit, Dämpfung oder Masse einzeln oder gemeinsam verstellt werden, und daß die Auswerteeinrichtung (12) folgende Bestandteile enthält:

a) einen die Schwingungssignale des Lagerständers bzw. eines der Lagerständer (1, 2) aufnehmenden ersten Haltespeicher (21),

b) einen die Schwingungssignale von der Ausgleichsebene (11 bzw. 11') aufnehmenden zweiten Haltespeicher (27),

c) einen die sich bei verstimmtem Lagerständer (1) ergebenden Schwingungssignale vom Lagerständer aufnehmenden dritten Haltespeicher (24),

d) einen die sich bei Verstimmung ergebenden Schwingungssignale von der Ausgleichsebene (11 bzw. 11') aufnehmenden vierten Haltespeicher (30),

e) eine Differenzschaltung (31) zur Bildung der Differenz der im zweiten und vierten Haltespeicher (27, 30) abgelegten Signale,

f) einen an die Differenzschaltung (31) angeschlossenen Differenzspeicher (32),

g) einen Multiplizierer (33) zur Bildung des Produkts aus dem im dritten Haltespeicher (24) gespeicherten Meßwert mit einem in einem Faktorspeicher (38) gespeicherten Faktor für die durch die Verstimmung erzeugte Differenz der dynamischen Lagersteifigkeit,

h) einem dem Multiplizierer (33) nachgeschalteten weiteren Speicher (39),

i) eine Divisionsschaltung (34) zur Bildung des Quotienten der im weiteren Speicher (39) und im Differenzspeicher (32) gespeicherten Signale,

j) einen Ergebnisspeicher (35) zur Aufnahme des Quotienten,

k) eine weitere Multiplizierschaltung (41) zur Multiplikation eines von einem Drehfrequenzspeicher (40) kommenden quadrierten Signals der Drehfrequenz mit dem Inhalt des Ergebnisspeichers (35),

l) einen Endspeicher (42) zur Aufnahme des Ausgangssignals der Multiplizierschaltung (41),

m) eine weitere Divisionsschaltung (36) zur Bildung des Quotienten der im ersten Haltespeicher (21) und im Endspeicher (42) abgelegten Meßwerte, und

h) eine Anzeigeeinheit (37) zur Anzeige des Ausgangssignals der weiteren Divisionsschaltung (36) als in der Ausgleichsebene anzubrigende Korrektur nach Betrag und Winkel.

7. Vorrichtung nach Anspruch 6, dadurch gekennzeichnet, daß seitlich des Rotors (3) weitere, in Axialrichtung des Rotors verschieb- und arretierbare Schwingungsumformer angebracht sind.

8. Vorrichtung nach Anspruch 6, dadurch gekennzeichnet, daß in jeder Ausgleichsebene des Rotors (3) ein Schwingungsumformer fest angeordnet ist.

9. Vorrichtung nach einem der Ansprüche 6 bis 8, dadurch gekennzeichnet, daß die Schwingungen des Rotors (3) an dem verstimmbaren Lagerständer (1) bzw. den verstimmbaren Lagerständern (1, 2) und/oder an seiner mindestens einen Ausgleichsebene (11 bzw. 11') durch mindestens eine Lasermeßeinrichtung gemessen wird.

**Claims**

1. A method of determining the relationship between an out-of-balance in a balancing plane of a rotor, particularly a resilient rotor, and a measurement signal caused by the out-of-balance at a bearing pedestal of the rotor, particularly a bearing pedestal of a balancing machine, characterised in that, at a given measuring speed of rotation, first the deflection of the rotor out of the zero position at the balancing plane is measured, after a detuning of the oscillation characteristics of the bearing pedestal, the deflections of the rotor at the balancing plane and, in addition, the oscillations at the detuned bearing pedestal are again measured and that then the relationship between the out-of-balance and the measurement signal is determined by forming the quotient from the difference in the deflections of the rotor at the balancing plane with detuned and undetuned bearing pedestal multiplied by the rotary frequency squared on the one hand and the product of the deflection of the detuned bearing pedestal and a factor describing the detuning on the other hand.

2. A method as claimed in Claim 1, characterised in that, when a plurality of bearing pedestals are present and/or a plurality of balancing planes are present and when at least one bearing pedestal is detuned, the particular quotients resulting on the allocation of each of the bearing pedestals to each of the balancing planes are each determined according to the said quotient.

3. A method as claimed in Claim 1 or Claim 2, characterised in that the detuning of the bearing pedestal is effected at least at one measuring speed of rotation during the measurement run.

4. A method as claimed in any of the preceding Claims, characterised in that a plurality of deflections about the balancing plane are measured at axial distances from this and that the deflection in the balancing plane is interpolated from these.

5. A method as claimed in any of the preceding Claims, characterised in that in order to determine the position and magnitude of the out-of-balance of the rotor, the reciprocal value of the quotient is multiplied by the measured value which describes the deflection of the undetuned bearing pedestal.

6. An apparatus for carrying out the method as claimed in any of Claims 1 to 5 with a balancing machine consisting of one or more bearing pedestals (1, 2) which can be detuned in its or their oscillation characteristics, for the rotatable mounting of the rotor (3) to be examined, a drive (5) for the rotor (3), an angular-position pick-off (6), devices (9, 10) for detecting the oscillations of the bearing pedestal or pedestals (1, 2) and an evaluation device (12), characterised in that mounted at the side of the rotor (3) is at least one oscillation converter (17) which measures the oscillations of the rotor (3) at the at least one balancing plane (11, 11'), that devices (14 or 15) are provided to detune the bearing pedestal or pedestals (1, 2), by means of which devices its or their spring rigidity, damping or mass are adjusted individually or jointly, and that the evaluation device (12) contains the following components :

a) a first latching store (21) receiving the oscillation signals of the bearing pedestal or of one of the bearing pedestals (1, 2),

b) a second latching store (27) receiving the oscillation signals from the balancing plane (11 or 11'),

c) a third latching store (24) receiving the oscillation signals from the bearing pedestal resulting when the bearing pedestal (1) is detuned,

d) a fourth latching store (30) receiving the oscillation signals from the balancing plane (11 or 11') resulting on detuning,

e) a differential circuit (31) to form the difference of the signals deposited in the second and fourth latching stores (27, 30),

f) a difference store (32) connected to the differential circuit (31),

g) a multiplier (33) to form the product of the measured value stored in the third latching store (24) and a factor stored in a factor store (38) for the difference of the dynamic bearing rigidity produced by the detuning,

h) a further store (39) following on the multiplier (33),

i) a division circuit (34) to form the quotient of the signals stored in the further store (39) and in the difference store (32),

j) a result store (35) to receive the quotient,

k) a further multiplier circuit (41) for the multiplication of a squared signal of the rotary frequency, coming from a rotary-frequency store (40), by the contents of the result store (35),

l) a final store (42) to receive the output signal of the multiplier circuit (41),

m) a further division circuit (36) to form the quotient of the measured values deposited in the first latching store (21) and in the final store (42), and

n) a display unit (37) to display the output signal of the further division circuit (36) as a correction, in amount and angle, to be made in the balancing plane.

7. An apparatus as claimed in Claim 6, characterised in that further oscillation converters, which can be displaced and locked in the axial direction of the rotor, are provided at the side of the rotor (3).

8. An apparatus as claimed in Claim 6, characterised in that an oscillation converter is mounted fixed in each balancing plane of the rotor (3).

9. An apparatus as claimed in any of Claims 6 to 8, characterised in that the oscillations of the rotor (3) at the detunable bearing pedestal (1) or the detunable bearing pedestals (1, 2) and/or at its at least one balancing plane (11 or 11') are measured by at least one laser measuring device.

**Revendications**

1. Procédé de détermination du rapport entre un balourd dans un plan de correction d'un rotor, en particulier d'un rotor élastique, et un signal de mesure provoqué par le balourd sur un montant de support du rotor, en particulier un montant de support d'une machine d'équilibrage, caractérisé en ce que, pour une vitesse de rotation de mesure donnée, on mesure d'abord la déviation du rotor dans le plan de correction par rapport à la position zéro, on mesure, après avoir modifié les propriétés vibratoires du montant de support, de nouveau les déviations du rotor dans le plan de correction et, en plus, les vibrations sur le montant de support dont on a modifié les propriétés vibratoires, et l'on détermine ensuite le rapport entre le balourd et le signal de mesure en formant le quotient de la différence entre les déviations du rotor dans le plan de correction lorsque les propriétés du montant de support ont été modifiées et celles lorsque ces propriétés n'ont pas été modifiées, multiplié par la fréquence de rotation au carré d'une part, et le produit de la déviation du montant de support dont les propriétés vibratoires ont été modifiées et d'un facteur décrivant la modification d'autre part.

2. Procédé selon la revendication 1, caractérisé en ce qu'en présence de plusieurs montants de support et/ou en présence de plusieurs plans de correction et en modifiant les propriétés vibratoires d'au moins un montant de support, on détermine chaque fois les quotients obtenus pour la relation entre chacun des montants de support et chacun des plans de correction en correspondance avec le quotient indiqué.

3. Procédé selon la revendication 1 ou 2, caractérisé en ce qu'on effectue la modification des propriétés vibratoires du montant de support pendant le processus de mesure, pour au moins une vitesse de rotation de mesure.

4. Procédé selon l'une des revendications précédentes, caractérisé en ce qu'on mesure plusieurs déviations autour du plan de correction à des distances axiales de celui-ci, et l'on interpole, à partir de ces mesures, la déviation dans le plan de correction.

5. Procédé selon l'une des revendications précédentes, caractérisé en ce que, pour déterminer le balourd du rotor en position et en grandeur, on multiplie l'inverse du quotient par la valeur de mesure qui décrit la déviation du montant de support dont les propriétés vibratoires n'ont pas été modifiées.

6. Dispositif pour mettre en œuvre le procédé selon l'une des revendications 1 à 5 avec une machine d'équilibrage comprenant un ou plusieurs montant(s) de support (1, 2) dont les propriétés vibratoires peuvent être modifiées, assurant l'appui en rotation du rotor (3) à examiner, un mécanisme (5) d'entraînement du rotor (3), un transmetteur de position angulaire (6), des dispositifs (9, 10) pour détecter les vibrations du ou des montant(s) de support (1, 2) et une unité de traitement (12), caractérisé en ce qu'il comporte, latéralement par rapport au rotor (3), au moins un convertisseur de vibrations (17) qui mesure les vibrations du rotor (3) sur au moins un plan de correction (11, 11'), en ce qu'il comporte, pour modifier les propriétés vibratoires du ou des montant(s) de support (1, 2), des dispositifs (14, respectivement 15) permettant de modifier individuellement ou en commun sa ou leur rigidité élastique, leur amortissement ou leur masse, et en ce que l'unité de traitement (12) comprend les composants suivants :

a) une première mémoire de retenue (21) recevant les signaux de vibrations du montant de support ou de l'un des montants de support (1, 2) ;

b) une seconde mémoire de retenue (27) recevant les signaux de vibrations du plan de correction (11 ou 11') ;

c) une troisième mémoire de retenue (24) recevant des signaux de vibrations du montant (1) qui apparaissent lorsque les propriétés vibratoires de ce montant sont modifiées ;

d) une quatrième mémoire de retenue (30) recevant les signaux de vibrations du plan de correction (11 ou 11') apparaissant en cas de modification des propriétés vibratoires ;

e) un montage soustracteur (31) pour former la différence entre les signaux mémorisés dans la seconde mémoire (27) et dans la quatrième mémoire (30) ;

f) une mémoire de différence (32) reliée au montage soustracteur (31) ;

g) un multiplicateur (33) pour former le produit de la valeur de mesure mémorisée dans la troisième mémoire de retenue (24) avec un facteur, mémorisé dans une mémoire de facteurs (38), correspondant à la différence de rigidité dynamique des supports produite par la modification des propriétés vibratoires ;

h) une autre mémoire (39) montée en aval du multiplicateur (33) ;

i) un montage diviseur (34) pour former le quotient des signaux mémorisés dans l'autre mémoire (39) et dans la mémoire de différences (32) ;

j) une mémoire de résultats (35) pour recevoir le quotient ;

k) un autre montage multiplicateur (41) pour multiplier un signal au carré de la fréquence de rotation, provenant d'une mémoire de fréquences de rotation (40) avec le contenu de la mémoire de résultats (35) ;

l) une mémoire finale (42) pour recevoir le signal de sortie du montage multiplicateur (41) ;

m) un autre montage diviseur (36) pour former le quotient des valeurs de mesure mémorisées dans la première mémoire de retenue (21) et dans la mémoire finale (42) ; et

n) une unité d'affichage (37) pour afficher le signal de sortie de l'autre montage diviseur (36), en tant que correction en module et en angle à apporter dans le plan de correction.

7. Dispositif selon la revendication 6, caractérisé en ce que d'autres convertisseurs de vibrations, pouvant être déplacés et bloqués en direction axiale, sont placés latéralement par rapport au rotor (3).

8. Dispositif selon la revendication 6, caractérisé en ce qu'un convertisseur de vibrations est placé fixement dans chaque plan de correction du rotor (3).

9. Dispositif selon l'une des revendications 6 à 8, caractérisé en ce que les vibrations du rotor (3) sur le montant de support (1) dont on peut modifier les propriétés vibratoires ou les montants de support (1, 2) dont on peut modifier les propriétés vibratoires, et/ou sur son (il y en a au moins un) ou ses plans de correction (11 ou 11'), sont mesurées par au moins une unité de mesure à laser.

FIG.1

FIG.2

0 091 496

0 091 496

FIG. 3